# EUROPEAN PATENT APPLICATION

(11) **EP 4 597 718 A1**
(43) Date of publication of application: **06.08.2025**
(21) Application number: 24154964.1
(22) Date of filing: 31.01.2024
(51) Int. Cl.: H01M 50/375, H01M 50/367, H01M 10/613, H01M 10/625, H01M 50/209, H01M 50/249, H01M 50/342, H01M 50/383, B32B 17/10

(54) **BATTERY HOUSING WITH VENTING PATH**

(71) Applicant: VOLVO TRUCK CORPORATION, 405 08 Göteborg (SE)
(72) Inventor: JONSSON, Kasper, 417 57 GÖTEBORG (SE); ALOKAR, Vikram, 418 70 GÖTEBORG (SE); HÖGLUND, Nils, 417 08 GÖTEBORG (SE); IRANNEZHAD, Mike, 411 20 GÖTEBORG (SE); LINDELÖW, Fredrik, 541 94 SKÖVDE (SE)
(74) Representative: Kransell & Wennborg KB

(57) **Abstract**

A battery housing (100) for holding a plurality of battery cells (102) for a vehicle, the battery housing comprising: a cell compartment (104) comprising an opening (106); a vent channel (108) fluidly connected to the cell compartment via the opening, the vent channel comprising a first outlet (110) and a second outlet (112), each of the first and second outlet being fluidly connected to an outside of the battery housing; and a thermal expansion material (114) arranged in a flow path between the opening and the first outlet, the thermal expansion material being configured to expand to prevent a flow through the first outlet at a predetermined threshold temperature.

## Description

### TECHNICAL FIELD

The disclosure relates generally to battery packs for vehicles. In particular aspects, the disclosure relates to a battery housing comprising a venting path for venting heated gas and particles during thermal runaway event. The disclosure can be applied to heavy-duty vehicles, such as trucks, buses, and construction equipment, among other vehicle types. The disclosure can be applied to marine vessels and the like. Although the disclosure may be described with respect to a particular vehicle, the disclosure is not restricted to any particular vehicle.

### BACKGROUND

Thermal runaway in battery packs for vehicles refers to a chain reaction of escalating heat generation within the battery cells. This process can be triggered by factors like overcharging, internal short circuits, or physical damage. As the temperature rises, it can lead to a self-perpetuating cycle, causing cells to heat up rapidly, potentially leading to gas release, fire, or even explosion. Managing this runaway reaction is critical to prevent severe damage to the battery pack, vehicle, and surrounding environment.

In the event of a thermal runaway, efficient management of hot gases and particles within the battery pack is crucial to prevent rapid thermal spread. Strategically designed chimneys within the pack are utilized to guide and channel hot gases, ensuring controlled pathways that inhibit thermal propagation and limit the acceleration of the runaway process. Vents strategically positioned within the pack are set to open at specific pressures, enabling the release of accumulated hot gases. Meanwhile, specialized trapping mechanisms are deployed at designated locations within the pack to contain and prevent particles from exiting. This containment is essential to mitigate the risk of these particles igniting external gases, reducing potential hazards outside the battery pack. Accordingly, it is desirable to provide improved battery housing designs for mitigating damage caused by a thermal runaway event.

### SUMMARY

According to a first aspect of the disclosure, it is provided a battery housing for holding a plurality of battery cells for a vehicle, the battery housing comprising: a cell compartment comprising an opening; a vent channel fluidly connected to the cell compartment via the opening, the vent channel comprising a first outlet and a second outlet, each of the first and second outlet being fluidly connected to an outside of the battery housing; and a thermal expansion material arranged in a flow path between the opening and the first outlet, the thermal expansion material being configured to expand to prevent a flow through the first outlet at a predetermined threshold temperature.

The design of the claimed battery housing provides advantages in thermal management in battery packs for vehicles. By incorporating a vent channel with dual outlets, the housing can efficiently manage the heat and gases generated during thermal events. The described structure ensures that hot gases have a controlled escape route, minimizing the risk of heat build-up and potential further thermal runaway within the battery pack.

In particular, the inclusion of the thermal expansion material in the flow path between the cell compartment and the first outlet adds an important safety feature to the battery housing. The thermal expansion material is engineered to expand at a predetermined threshold temperature, effectively blocking the flow through the first outlet in response to excessive heat. Such a mechanism ensures that the venting of hot gases is a controlled process where gases are vented along a selected flow path, enhancing the overall safety of the system. The responsive nature of the thermal expansion material, acting as a smart barrier thereby offers an adaptive solution to the dynamic thermal challenges faced by battery packs in vehicles.

Optionally in some examples, including in at least one preferred example, the thermal expansion material is arranged in the vent channel between the opening and the first outlet. A technical benefit may include enhanced precision in controlling the expansion of the thermal expansion material. By arranging this material specifically in the vent channel between the opening and the first outlet, it ensures a more targeted response to thermal conditions, improving the efficacy of preventing unintended gas release through the first outlet.

Optionally in some examples, including in at least one preferred example, the thermal expansion material is arranged at the first outlet. A technical benefit may include improved effectiveness in sealing the vent during a thermal event. By positioning the thermal expansion material directly at the first outlet, the design ensures that the material acts as a direct barrier to gas escape when expanded, thus providing a more immediate and reliable response to high temperatures.

Optionally in some examples, including in at least one preferred example, the thermal expansion material is arranged on a grid arranged across the vent channel between the opening and the first outlet. A technical benefit may include increased structural integrity and uniformity in the deployment of the thermal expansion material. The arrangement of the thermal expansion material on a grid across the vent channel offers a more evenly distributed and consistent barrier, which can be crucial for achieving effective and predictable sealing during thermal runaway events.

Optionally in some examples, including in at least one preferred example, the thermal expansion material is arranged on a grid located on a battery housing wall and arranged to cover the first outlet. A technical benefit may include enhanced protection for the battery housing wall and the first outlet. Arranging the thermal expansion material on a grid covering the first outlet and located on the battery housing wall ensures that the most vulnerable points of gas egress are securely protected, minimizing the risk of hazardous leaks. Moreover, the use of a grid enables the use of a vent channel and opening of any size while still being able to effectively block the channel.

Optionally in some examples, including in at least one preferred example, the grid is a metal grid. A technical benefit may include added durability and resistance to physical and thermal stress. Using a metal grid, known for its robustness, provides a strong foundation for the thermal expansion material, ensuring that the safety mechanism remains intact and functional even under extreme conditions.

Optionally in some examples, including in at least one preferred example, the grid is a metal grid comprising wires having a dimension in the range of 0.3 mm to 0.6 mm.

Optionally in some examples, including in at least one preferred example, a size of an opening in the grid is in the range of 0.4 mm to 1.2 mm.

Optionally in some examples, including in at least one preferred example, a thickness of the thermal expansion material is in the range of 0.1 mm to 0.3 mm. A technical benefit of the described dimensions of the grid and the thermal expansion material is that an appropriate airflow can be maintained while effectively blocking the channel in case of a thermal runaway event.

Optionally in some examples, including in at least one preferred example, the battery housing further comprises a battery breathing unit arranged at the first outlet, the breathing unit comprising a membrane configured to allow an airflow and to block particles. A technical benefit may include the enhanced protection of the breathing unit during a thermal runaway. The thermal expansion material effectively blocks heated gas from reaching the breathing unit, preserving its structural integrity and functionality. The protection prevents damage to the breathing unit's membrane, eliminating the need to replace the breathing unit and ensuring that it can continue to regulate airflow also after a thermal runaway event.

Optionally in some examples, including in at least one preferred example, the thermal expansion material is arranged in the battery breathing unit. A technical benefit may include a more integrated and efficient battery breathing unit. By arranging the thermal expansion material within the battery breathing unit, the protective features are consolidated into a single unit. Protection of the breathing unit can thereby be achieved without modifying the battery housing as such, which facilitates integration of the thermal expansion material in the overall battery venting solution.

Optionally in some examples, including in at least one preferred example, the thermal expansion material is arranged as a coating on a wall of the breathing unit. A technical benefit may include enhanced uniformity and effectiveness of the thermal expansion barrier. Applying the thermal expansion material as a coating on the wall of the breathing unit ensures a more seamless and consistent layer of protection, which can be crucial for effectively blocking the vent in response to high temperatures.

Optionally in some examples, including in at least one preferred example, the thermal expansion material is arranged on a grid within the breathing unit. A technical benefit may include a structured and reliable mechanism for expansion. Placing the thermal expansion material on a grid within the breathing unit provides a controlled and predictable expansion behavior, ensuring that the material expands in a manner that effectively seals the vent during thermal runaway.

Optionally in some examples, including in at least one preferred example, the membrane of the breathing unit is configured to withstand a temperature at least equal to the temperature for which the thermal expansion material expands to block the flow path from the battery cell through the first outlet. A technical benefit may include increased resilience of the breathing unit to high temperatures. Ensuring that the membrane of the breathing unit can withstand temperatures at least equal to the expansion temperature of the thermal expansion material enhances the durability and reliability of the unit under extreme thermal conditions.

Optionally in some examples, including in at least one preferred example, the membrane of the breathing unit is configured to withstand a temperature of at least 200°C. A technical benefit may include an enhanced ability to withstand severe thermal events. The membrane of the breathing unit is thereby capable of withstanding elevated temperatures which may occur during a thermal runaway event before the thermal expansion material closes the flow path to the breathing unit.

Optionally in some examples, including in at least one preferred example, the thermal expansion material is configured to initiate expansion at a temperature in the range of 60°C to 100°C. A technical benefit may include precise activation of the safety mechanism.

Optionally in some examples, including in at least one preferred example, the thermal expansion material is configured to be fully expanded at a temperature in the range of 150°C to 250°C. A technical benefit may include optimal performance during extreme thermal events. The thermal expansion material can thereby be configured to expand before the gas reaches temperatures which may damage the membrane of a breathing unit or other components in the flow path between the opening and the first outlet, or outside of the first outlet.

Optionally in some examples, including in at least one preferred example, the thermal expansion material is a sodium silicate or a polymer. A technical benefit may include improved material performance and compatibility. Choosing specific materials, like sodium silicate or a polymer, for the thermal expansion material can offer advantages in terms of their reaction speed, expansion volume, and compatibility with other components of the battery housing, optimizing the effectiveness of the thermal management system.

Optionally in some examples, including in at least one preferred example, the battery housing further comprises a plurality of battery cells, each battery cell comprising a breakable vent. A technical benefit may include enhanced individual cell safety. Incorporating battery cells with breakable vents into the design allows for a controlled release of pressure or gases in case of cell failure or overheating, which helps in preventing more severe outcomes like explosions or fires within the individual cells.

Optionally in some examples, including in at least one preferred example, it is provided a vehicle comprising a battery housing according to any one of the preceding examples.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary battery housing according to an example.
**FIG. 2** is an exemplary battery housing according to an example.
**FIG. 3** is an exemplary battery housing according to an example.
**FIG. 4** is an exemplary battery housing according to an example.
**FIG. 5** is an exemplary battery housing according to an example.
**FIG. 6** is an exemplary battery housing according to an example.
**FIG. 7** is a vehicle comprising an exemplary battery housing according to an example.

### DETAILED DESCRIPTION

The detailed description set forth below provides information and examples of the disclosed technology with sufficient detail to enable those skilled in the art to practice the disclosure.

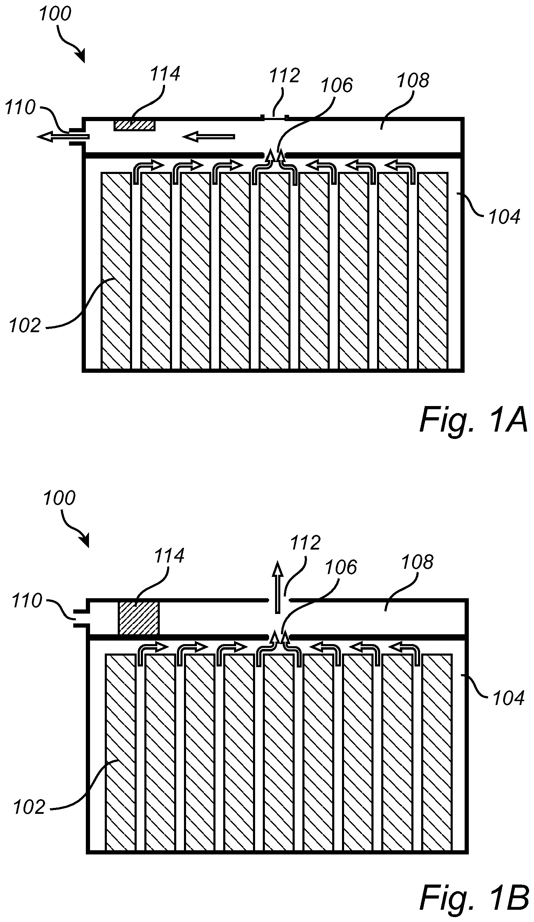

Fig. 1A is an exemplary battery housing 100 holding a plurality of battery cells 102 for a vehicle. The battery housing comprises a cell compartment 104 comprising an opening 106 and a vent channel 108 fluidly connected to the cell compartment 104 via the opening. The vent channel 108 allows the controlled release of gases, typically hydrogen and oxygen, that may form within battery cells due to chemical reactions or thermal changes. Vents are thereby important for maintaining a safe operating environment within the battery housing 100 by preventing excessive pressure buildups that could lead to leaks, ruptures, or other safety hazards.

The vent channel further comprises a first outlet 110 and a second outlet 112, each of the first and second outlet 110, 112 being fluidly connected to an outside of the battery housing 100. A thermal expansion material 114 is arranged in a flow path between the opening 106 of the cell compartment 104 and the first outlet 110, and in Fig. 1A the thermal expansion material 114 is arranged in the vent channel 108 at a location between the opening 106 and the first outlet 110. The arrows of Fig. 1A illustrate a gas flow during normal operation where any gas formed in the cell compartment 104 can flow out of the first outlet 110.

The thermal expansion material 114 is configured to expand to prevent a flow through the first outlet 110 at a predetermined threshold temperature as illustrated in Fig. 1B where the thermal expansion material 114 has expanded to block the vent channel 108 between the opening 106 and the first outlet. Thereby, heated gases occurring in the vent channel 108 during a thermal runaway event can be guided to exit the battery housing 100 through the second outlet 112 as illustrated by the arrows in Fig. 1B. Each battery cell 102 may advantageously comprise a breakable vent (not shown) configured to break in the event of a thermal runaway event in that cell 102. Moreover, the second outlet 112 may also comprise a breakable vent to prevent gas flow through the second outlet 112 during normal operation. Such a breakable vent would then be configured to break when exposed to an elevated pressure occurring in case of thermal runaway when the thermal expansion material 114 expands to block gas flow through the first outlet 110.

The thermal expansion material 114 can also be referred to as an intumescent material. Moreover, the thermal expansion material is preferably configured to initiate expansion at a temperature in the range of 60°C to 100°C and to be fully expanded at a temperature in the range of 150°C to 250°C, or at least sufficiently expanded so as to block a gas flow. The thermal expansion material may for example be based on sodium silicate or a polymer and is configured to expand when exposed to heat, thereby forming a rigid, heat-resistant, and thermally insulating layer. However, other materials such as expandable graphite could also be used.

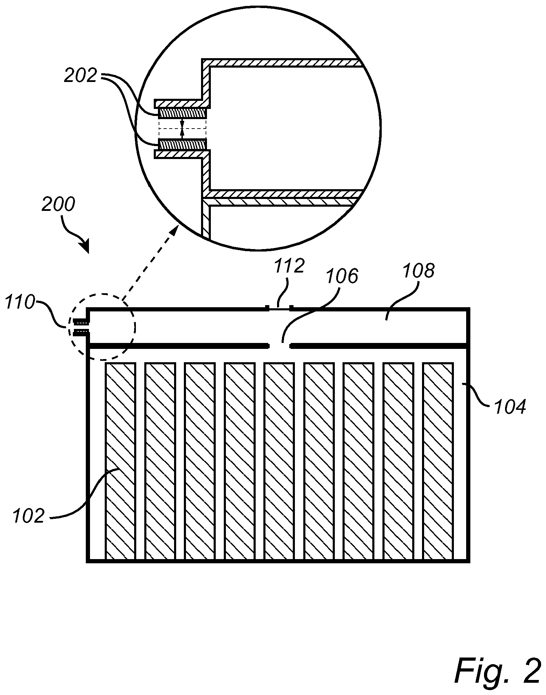

Fig. 2 is an exemplary battery housing 200 where the thermal expansion material 202 is arranged at the first outlet 110. The thermal expansion material 202 may for example be arranged on a sidewall of the vent channel 108 or in the first outlet 110 as such, depending on how the outlet is configured.

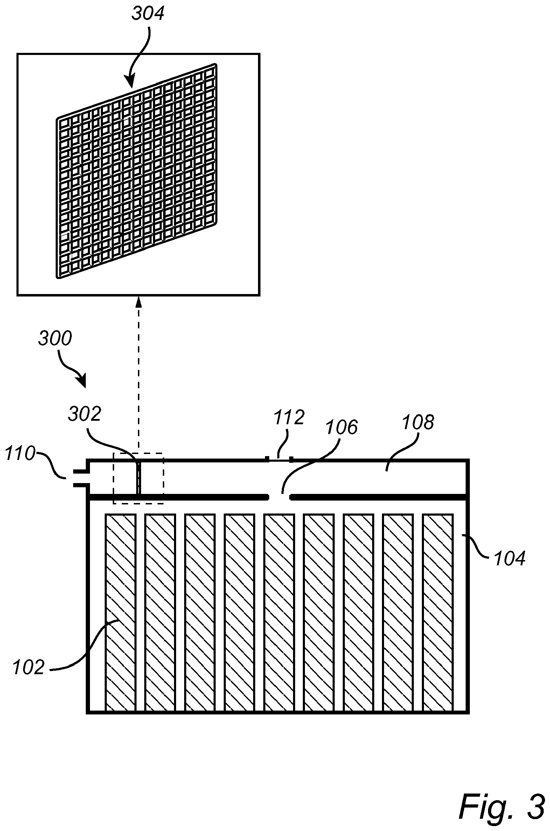

Fig. 3 is an exemplary battery housing 300 where the thermal expansion material 302 is arranged on a grid 304 arranged across the vent channel between the opening and the first outlet. wherein the grid 304 is a metal grid. The grid 304 may be a metal grid comprising wires, rods or the like having a dimension in the range of 0.3 mm to 0.6 mm being coated with a thermally expanding material having a thickness in the range of 0.1 mm to 0.3 mm. A size of an opening in the grid 304 may be in the range of 0.4 mm to 1.2 mm and the material parameters and dimensions are together selected to achieve the desired blocking effect at the predetermined threshold temperature while still allowing a gas flow when not expanded.

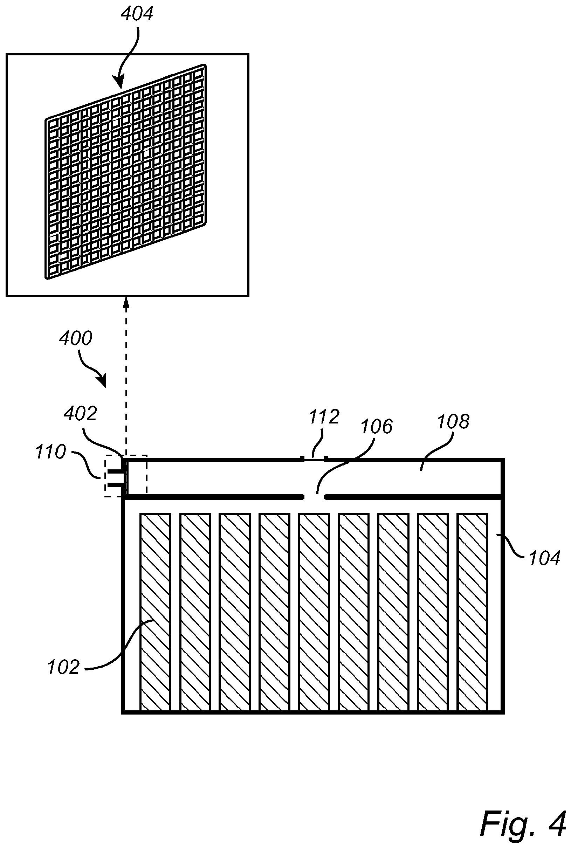

In Fig. 4, the thermal expansion material 402 is arranged on a grid 404 located on a battery housing wall and arranged to cover the first outlet 110. The grid 404 may be arranged either on the inside or on the outside of the battery housing 400. Dimensions of the grid 404 in the embodiment illustrated in Fig. 4 may be the same as described in relation to Fig. 3.

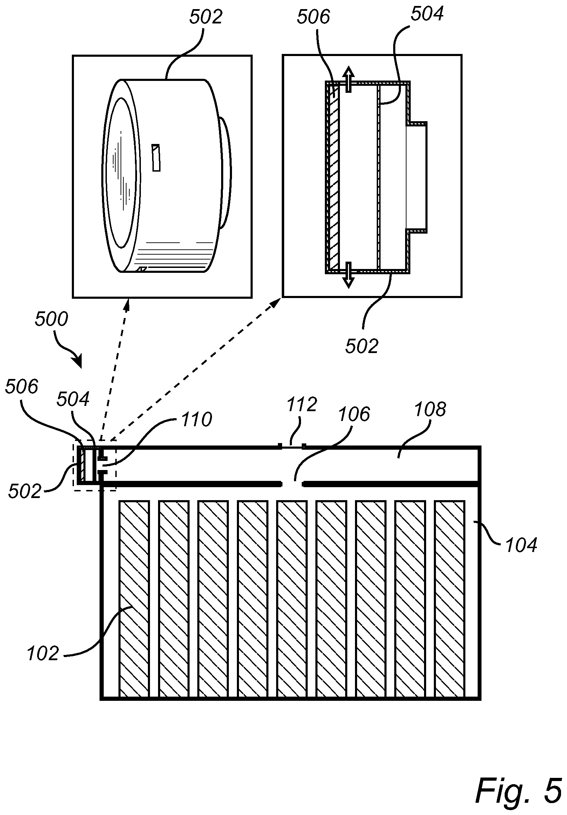

Fig. 5 schematically illustrates a battery housing 500 further comprising a battery breathing unit 502 arranged at the first outlet 110. The breathing unit 502 comprises a membrane 504 configured to allow an airflow through the membrane 504 and to block particles from passing the membrane 504. A breathing vent in the battery housing for a vehicle is a component designed to regulate internal pressure variations caused by changes in temperature and altitude during the battery's operation. The breathing unit 502 allows the controlled release of gases, typically hydrogen and oxygen, that may form within the battery cells due to chemical reactions or thermal changes.

In the battery housing 500 illustrated in Fig. 5, the thermal expansion material 506 is arranged in the battery breathing unit 502 as a coating on inner walls of the battery breathing unit 502.

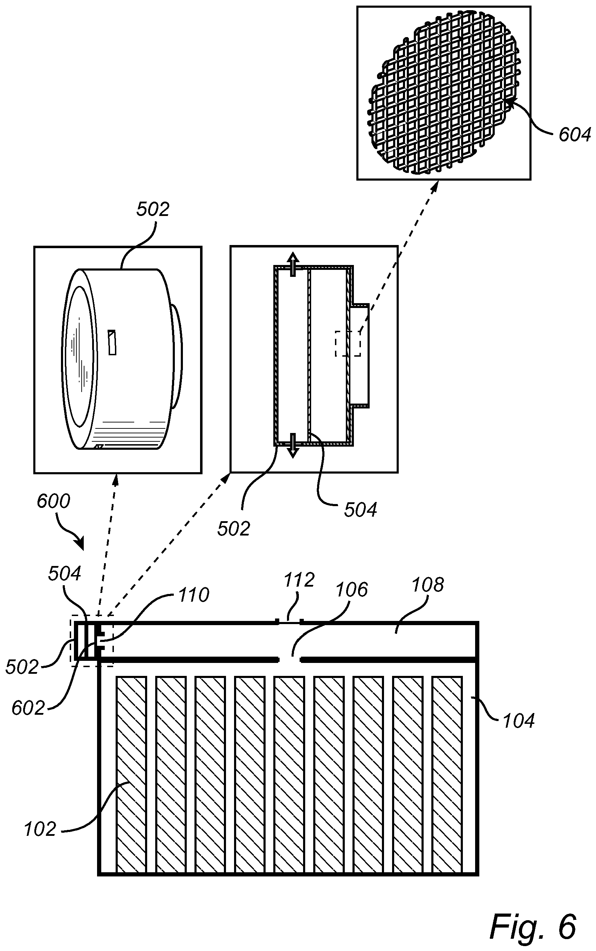

As illustrated in the battery housing 600 of Fig. 6, the thermal interface material 602 may also be arranged on a grid 604 located within the breathing unit 502 so that heated gases are prevented from reaching the membrane 504. The membrane 504 of the breathing unit 502 is configured to withstand a temperature at least equal to the temperature for which the thermal expansion material expands to block the flow path from the battery cell 102 through the first outlet 110. Thereby, the membrane 504 is not damaged at the temperatures reached before the thermally expanding material blocks the flow path to the breathing unit 502. The membrane 504 of the breathing unit 502 may for example be configured to withstand a temperature of at least 200°C.

Throughout Figs. 2 to 6, the battery housing has been illustrated in a normal operating situation where the thermal expansion material has not expanded, and where gases are allowed to flow though the first outlet 110. For all illustrated examples, the thermal expansion material is configured to block a flow path through the first outlet in the event of heated gases, forcing the gas flow through the second outlet 112.

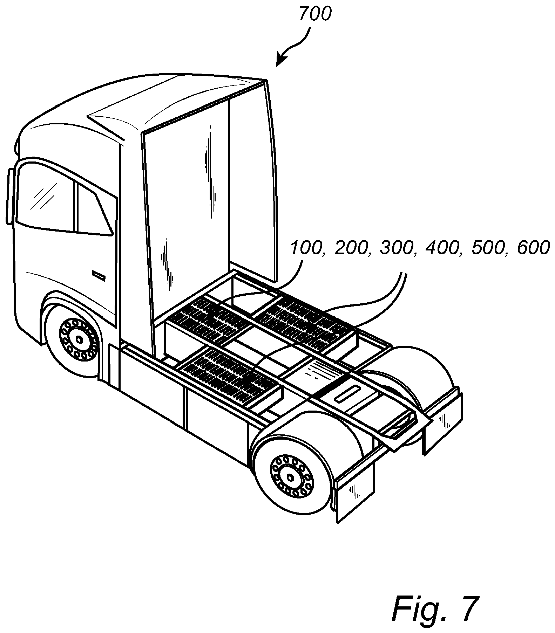

Fig. 7 illustrates a vehicle 700 comprising a battery housing 100, 200, 300, 400, 500, 600 according to any one of the preceding examples.

Example 1. A battery housing (100) for holding a plurality of battery cells (102) for a vehicle, the battery housing comprising: a cell compartment (104) comprising an opening (106); a vent channel (108) fluidly connected to the cell compartment via the opening, the vent channel comprising a first outlet (110) and a second outlet (112), each of the first and second outlet being fluidly connected to an outside of the battery housing; and
a thermal expansion material (114) arranged in a flow path between the opening and the first outlet, the thermal expansion material being configured to expand to prevent a flow through the first outlet at a predetermined threshold temperature.

Example 2. The battery housing according to example 1, wherein the thermal expansion material (114) is arranged in the vent channel between the opening and the first outlet.

Example 3. The battery housing (200) according to example 1, wherein the thermal expansion material (202) is arranged at the first outlet.

Example 4. The battery housing according to example 1 or 2, wherein the thermal expansion material is arranged on a grid arranged across the vent channel between the opening and the first outlet.

Example 5. The battery housing according to example 3, wherein the thermal expansion material is arranged on a grid located on a battery housing wall and arranged to cover the first outlet.

Example 6. The battery housing according to example 4 or 5, wherein the grid is a metal grid.

Example 7. The battery housing according to example 6, wherein the grid is a metal grid comprising wires having a dimension in the range of 0.3 mm to 0.6 mm.

Example 8. The battery housing according to example 6 or 7, wherein a size of an opening in the grid is in the range of 0.4 mm to 1.2 mm.

Example 9. The battery housing according to any one of the preceding examples, wherein a thickness of the thermal expansion material is in the range of 0.1 mm to 0.3 mm.

Example 10. The battery housing according to any one of the preceding examples, further comprising a battery breathing unit arranged at the first outlet, the breathing unit (502) comprising a membrane (504) configured to allow an airflow and to block particles.

Example 11. The battery housing according to example 10, wherein the thermal expansion material (506) is arranged in the battery breathing unit.

Example 12. The battery housing according to example 11, wherein the thermal expansion material is arranged as a coating on a wall of the breathing unit.

Example 13. The battery housing according to example 11, wherein the thermal expansion material is arranged on a grid within the breathing unit.

Example 14. The battery housing according to any one of examples 10 to 13, wherein the membrane of the breathing unit is configured to withstand a temperature at least equal to the temperature for which the thermal expansion material expands to block the flow path from the battery cell through the first outlet.

Example 15. The battery housing according to any one of examples 10 to 14, wherein the membrane of the breathing unit is configured to withstand a temperature of at least 200°C.

Example 16. The battery housing according to any one of the preceding examples, wherein the thermal expansion material is configured to initiate expansion at a temperature in the range of 60°C to 100°C.

Example 17. The battery housing according to any one of the preceding examples, wherein the thermal expansion material is configured to be fully expanded at a temperature in the range of 150°C to 250°C.

Example 18. The battery housing according to any one of the preceding examples, wherein the thermal expansion material is a sodium silicate or a polymer.

Example 19. The battery housing according to any one of the preceding examples, further comprising a plurality of battery cells, each battery cell comprising a breakable vent.

Example 20. A vehicle (700) comprising a battery housing (100, 200, 300, 400) according to any one of the preceding examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery housing (100) for holding a plurality of battery cells (102) for a vehicle, the battery housing comprising:
a cell compartment (104) comprising an opening (106);
a vent channel (108) fluidly connected to the cell compartment via the opening, the vent channel comprising a first outlet (110) and a second outlet (112), each of the first and second outlet being fluidly connected to an outside of the battery housing; and
a thermal expansion material (114) arranged in a flow path between the opening and the first outlet, the thermal expansion material being configured to expand to prevent a flow through the first outlet at a predetermined threshold temperature.

2. The battery housing according to claim 1, wherein the thermal expansion material (114) is arranged in the vent channel between the opening and the first outlet.

3. The battery housing (200) according to claim 1, wherein the thermal expansion material (202) is arranged at the first outlet.

4. The battery housing according to claim 1 or 2, wherein the thermal expansion material is arranged on a grid arranged across the vent channel between the opening and the first outlet.

5. The battery housing according to claim 3, wherein the thermal expansion material is arranged on a grid located on a battery housing wall and arranged to cover the first outlet.

6. The battery housing according to claim 4 or 5, wherein the grid is a metal grid.

7. The battery housing according to claim 6, wherein the grid is a metal grid comprising wires having a dimension in the range of 0.3 mm to 0.6 mm.

8. The battery housing according to claim 6 or 7, wherein a size of an opening in the grid is in the range of 0.4 mm to 1.2 mm.

9. The battery housing according to any one of the preceding claims, wherein a thickness of the thermal expansion material is in the range of 0.1 mm to 0.3 mm.

10. The battery housing according to any one of the preceding claims, further comprising a battery breathing unit arranged at the first outlet, the breathing unit (502) comprising a membrane (504) configured to allow an airflow and to block particles.

11. The battery housing according to claim 10, wherein the thermal expansion material (506) is arranged in the battery breathing unit.

12. The battery housing according to claim 11, wherein the thermal expansion material is arranged as a coating on a wall of the breathing unit.

13. The battery housing according to claim 11, wherein the thermal expansion material is arranged on a grid within the breathing unit.

14. The battery housing according to any one of claims 10 to 13, wherein the membrane of the breathing unit is configured to withstand a temperature at least equal to the temperature for which the thermal expansion material expands to block the flow path from the battery cell through the first outlet.

15. A vehicle (700) comprising a battery housing (100, 200, 300, 400) according to any one of the preceding claims.
